# EUROPEAN PATENT APPLICATION

(11) **EP 4 800 886 A1**
(43) Date of publication of application: **02.09.2026**
(21) Application number: 24903358.0
(22) Date of filing: 28.10.2024
(51) Int. Cl.: H02K 1/14

(54) **ELECTRIC MOTOR AND METHOD FOR MANUFACTURING ARMATURE CONSTITUTING SAID ELECTRIC MOTOR**

(30) Priority: 14.12.2023 JP 2023211386
(71) Applicant: KABUSHIKI KAISHA KOBE SEIKO SHO (KOBE STEEL, LTD.), Hyogo 651-8585 (JP)
(72) Inventor: IIMURA, Shota, Kobe-shi, Hyogo 651-2271 (JP); HAYASHI, Shumpei, Kobe-shi, Hyogo 651-2271 (JP)
(74) Representative: TBK
(86) International application number: PCT/JP2024/038379
(87) International publication number: WO 2025/126696

(57) **Abstract**

An electric motor (10) includes: an armature (14) including an iron core (26) and an armature coil (24) provided so as to surround the iron core (26); and a mover (12) disposed to be opposed to the armature (14). The iron core (26) includes a plurality of U-shaped members (28) and a plurality of U-shaped members (30) perpendicular to the U-shaped members (28). The U-shaped members (28) and the U-shaped members (30) each have a U-shape including a pair of side parts (42) parallel or substantially parallel to each other and an intermediate part linking the pair of side parts. The side parts constitute teeth parts of the iron core (26), and the intermediate part constitutes a yoke part of the iron core (26).

## Description

### Technical Field

The present invention relates to an electric motor having a magnetic path through which a magnetic flux flows three-dimensionally and a method for manufacturing an armature constituting the electric motor.

### Background Art

An electric motor including an armature having an armature coil and an iron core, and a mover opposed to the armature is known. In a conventional electric motor, a magnetic flux flows in a planar manner, for example, along a movable direction. However, an electric motor has been proposed which has a three-dimensional magnetic pole structure in which a magnetic flux flows not only in the movable direction but also in a direction intersecting the movable direction. For example, an electric motor recited in Patent Literature 1 is such an electric motor. The electric motor recited in Patent Literature 1 is configured such that a magnetic flux emitted from a surface on an opened side of a magnetic pole block branches into a movable direction and a direction intersecting the movable direction.

### Citation List

### Patent Literature

Patent Literature 1: Japanese Patent No. 6835692

Incidentally, while an electric motor having a structure in which a magnetic flux flows three-dimensionally (three-dimensional magnetic pole structure) as recited in Patent Literature 1 requires structure of a magnetic path for realizing such structure, no proposal has been made for a structure and a manufacturing method suitable for the structure.

### Summary of Invention

An object of the present invention is to provide an electric motor having a structure suitable for forming a magnetic path through which a magnetic flux flows three-dimensionally and a method for manufacturing an armature constituting the electric motor.

In order to solve the above-described problem, an electric motor according to an aspect of the present invention is an electric motor including: an armature including an iron core and an armature coil provided so as to surround the iron core; and a mover disposed to be opposed to the armature, in which the iron core of the armature is configured by a plurality of members made of electromagnetic steel pieces, each of the plurality of members has a U-shape including a pair of side parts parallel or substantially parallel to each other and an intermediate part linking the pair of side parts, the plurality of members include a plurality of first members and a plurality of second members having a longitudinal direction of the intermediate part perpendicular to a longitudinal direction of the intermediate part of the first member, each of the intermediate parts of the first members and the intermediate parts of the second members constitutes a yoke part of the iron core, and each of the side parts of the first members and the side parts of the second members constitutes a teeth part of the iron core.

A method for manufacturing the armature constituting the electric motor according to an aspect of the present invention includes: a first step of molding each of the plurality of first members and the plurality of second members; a second step of molding a plurality of blocks in which the plurality of first members and the plurality of second members are fixed on a prescribed number basis; and a third step of connecting the plurality of blocks to each other to mold the holding member.

A method for manufacturing the armature constituting the electric motor according to still another aspect of the present invention includes: a first step of molding each of the plurality of first members and the plurality of second members; and a second step of inserting each of the side parts of the plurality of first members and each of the side parts of the plurality of second members into the insertion hole of the holding member.

### Brief Description of Drawings

[FIG. 1] FIG. 1 is a perspective view for explaining an outline of an electric motor according to an embodiment of the present invention.
[FIG. 2] FIG. 2 is an enlarged view of a part in a rotation direction of the electric motor of FIG. 1.
[FIG. 3] FIG. 3 is an enlarged view of an upper part of FIG. 2 from which an armature coil is removed.
[FIG. 4] FIG. 4 is a view of FIG. 3 as viewed from a direction along a rotation axis.
[FIG. 5] FIG. 5 is a view of FIG. 3 as viewed in the rotation direction.
[FIG. 6] FIG. 6 is a view illustrating a mode in which a side part of a U-shaped member is bent.
[FIG. 7] FIG. 7 is a view illustrating a state in which the U-shaped member of FIG. 6 is assembled.
[FIG. 8] FIG. 8 is a view for explaining a method for manufacturing the U-shaped member.
[FIG. 9A] FIG. 9A is another view for explaining the method for manufacturing the U-shaped member, and is a view illustrating a state of the U-shaped member before molding.
[FIG. 9B] FIG. 9B is still another view for explaining the method for manufacturing the U-shaped member, and is a view illustrating a state of the U-shaped member after molding.
[FIG. 10A] FIG. 10A is a further view for explaining the method for manufacturing the U-shaped member, and is a view illustrating a state of the U-shaped member before molding.
[FIG. 10B] FIG. 10B is a still further view for explaining the method for manufacturing the U-shaped member, and is a view illustrating a state of the U-shaped member after molding.
[FIG. 11] FIG. 11 is a view illustrating a mode in which a holding member is used as one mode of a fixing structure of the U-shaped member.
[FIG. 12A] FIG. 12A is a view illustrating a step of inserting the U-shaped member into the armature coil, and is a view illustrating a state immediately before the U-shaped member is inserted into the armature coil.
[FIG. 12B] FIG. 12B is another view illustrating the step of inserting the U-shaped member into the armature coil, and is a view illustrating a state after the U-shaped member is inserted into the armature coil.
[FIG. 13A] FIG. 13A is a view illustrating a mode of a block forming the holding member, and is a top view of the block.
[FIG. 13B] FIG. 13B is another view showing a mode of the block forming the holding member, and is a side view of the block.
[FIG. 14A] FIG. 14A is a view for explaining a fixing structure of the U-shaped member using the holding member, and is a view illustrating a state before the U-shaped member is inserted into the holding member.
[FIG. 14B] FIG. 14B is another view for explaining the fixing structure of the U-shaped member using the holding member, and is a view illustrating a state after the U-shaped member is inserted into the holding member.
[FIG. 14C] FIG. 14C is still another view for explaining the fixing structure of the U-shaped member using the holding member, and is a view illustrating a state in which the U-shaped members are inserted into all insertion holes of the holding member.
[FIG. 15] FIG. 15 is a flowchart for explaining a step of manufacturing an armature including the U-shaped members.
[FIG. 16] FIG. 16 is a flowchart for explaining another mode of the step of manufacturing the armature including the U-shaped members.

### Description of Embodiments

### [Overall Structure of Electric Motor]

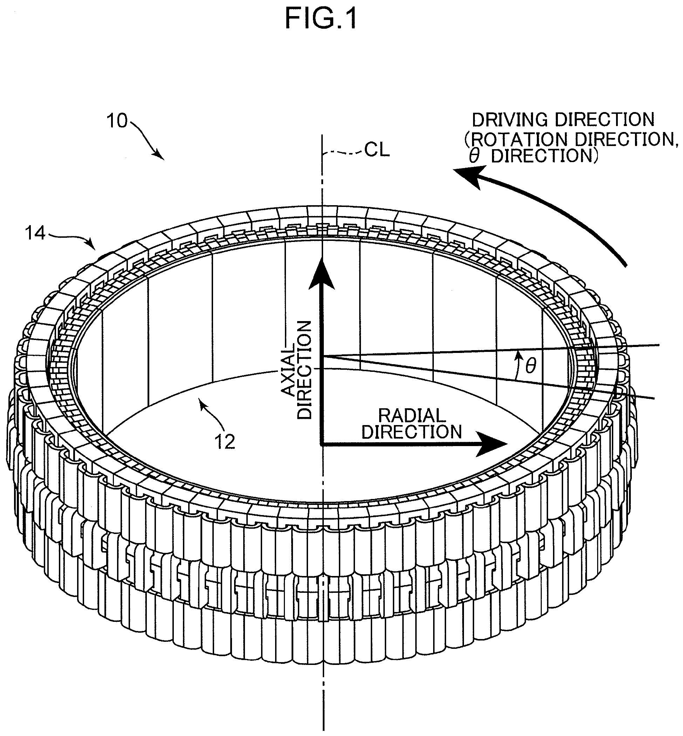

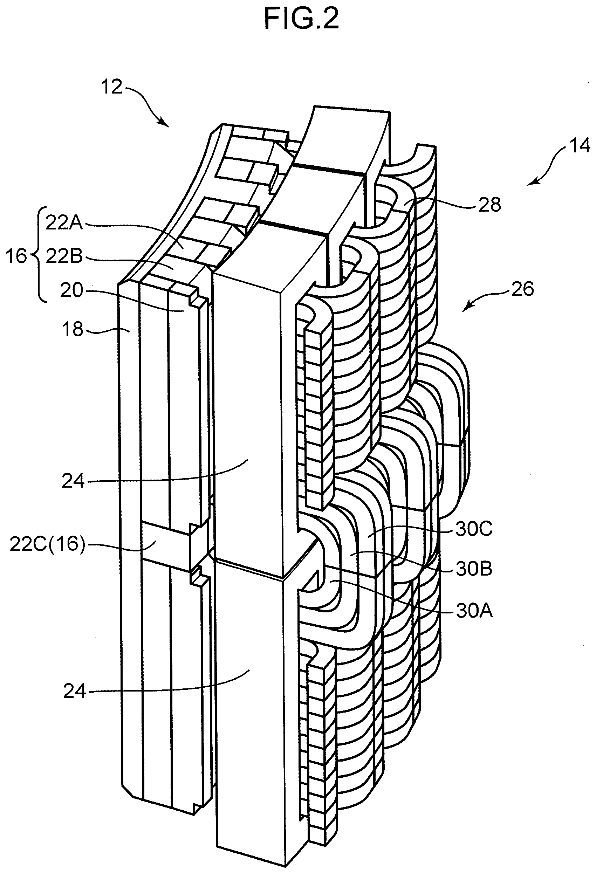

A preferred embodiment of the present invention will be described below with reference to the drawings. FIG. 1 is a perspective view for explaining an outline of an electric motor 10 according to an embodiment of the present invention. FIG. 2 is an enlarged view of a part in a rotation direction of the electric motor 10 of FIG. 1.

The electric motor 10 includes a mover 12 (also referred to as a rotor) and an armature 14 (also referred to as a stator) disposed on an outer peripheral side of the mover 12. The electric motor 10 of the present embodiment is a radial gap type electric motor in which the mover 12 is rotatably disposed on an inner side of the armature 14. The mover 12 and the armature 14 are disposed to be opposed to each other in a radial direction, and a gap is formed in the radial direction between the mover 12 and the armature 14.

The mover 12 is formed in an annular shape and is configured to be rotatable about a rotation axis CL of a rotation shaft (output shaft) (not illustrated) that rotates together with the mover 12.

The mover 12 includes a plurality of magnetic pole blocks 16 having magnetism, and a back yoke 18. Each of the plurality of magnetic pole blocks 16 includes an iron core 20 (rotor core) disposed opposed to the armature 14, and a plurality of permanent magnets 22A to 22C allowing the iron core 20 to oppose to the armature 14 and surrounding the iron core 20.

The plurality of permanent magnets 22A to 22C constituting the magnetic pole block 16 are disposed with the same magnetic poles facing the iron core 20. Furthermore, the magnetic pole blocks 16 adjacent to each other are connected to each other such that one surface of the respective permanent magnets 22A to 22C are in contact with each other. The back yoke 18 is an annular member, and is formed of, for example, a soft magnetic material. On an outer periphery of the back yoke 18, the plurality of magnetic pole blocks 16 are disposed so as to be adjacent in the rotation direction (circumferential direction).

The armature 14 is formed in an annular shape as a whole, and is non-rotatably fixed by being connected to a case (not illustrated) or the like. The armature 14 includes a plurality of armature coils 24 and an iron core 26 (stator core).

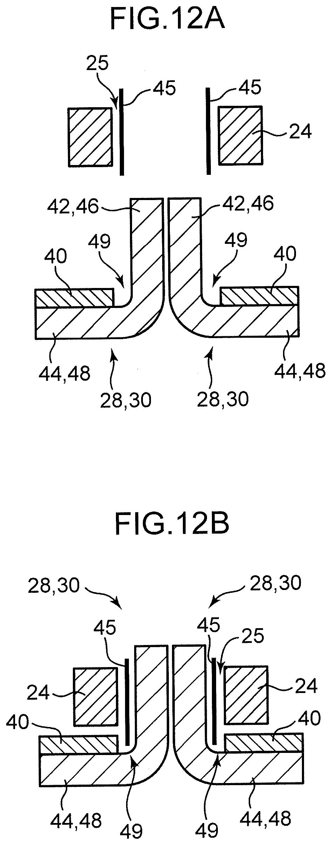

Each of the plurality of armature coils 24 has a frame shape in which a frame hole 25 (see FIG. 12) is formed. In addition, the armature coil 24 has an outer shape formed in a rectangular parallelepiped shape, and a longitudinal side is disposed along a direction of the rotation axis CL (hereinafter, an axial direction). Furthermore, the plurality of armature coils 24 are disposed side by side in the rotation direction and are disposed side by side in series in the axial direction.

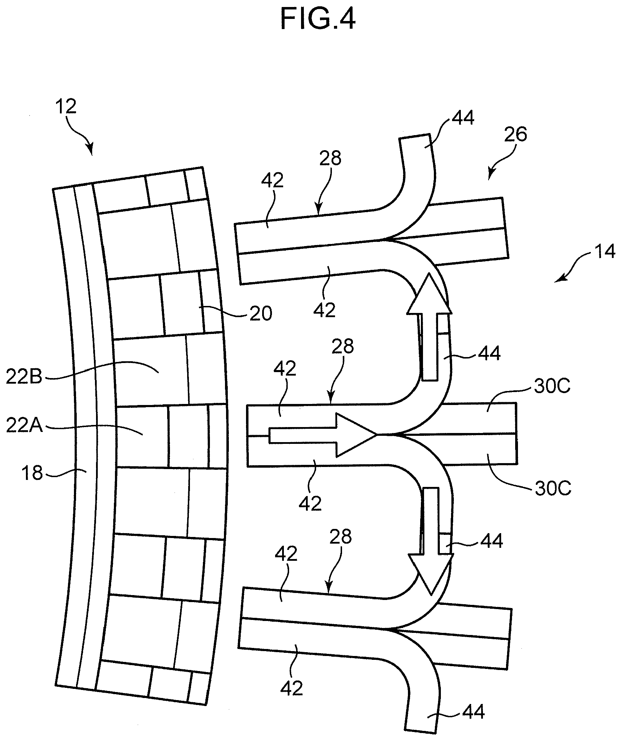

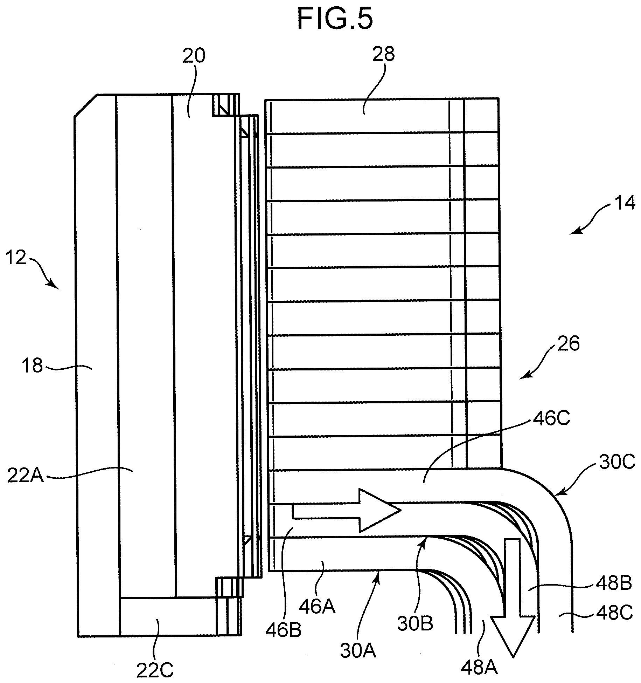

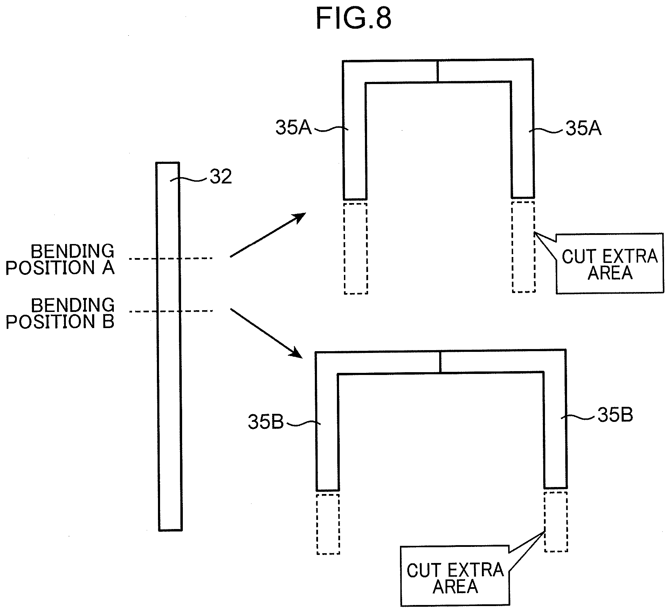

The iron core 26 includes a plurality of U-shaped members 28 and a plurality of U-shaped members 30A to 30C (hereinafter, when not distinguished, a U-shaped member 30) formed in a U-shape. Specifically, each of the plurality of U-shaped members 28 is configured by a pair of side parts 42 parallel (or substantially parallel) to each other and an intermediate part 44 linking the pair of side parts 42 (see FIG. 4). In addition, the plurality of U-shaped members 30A to 30C are configured respectively by a pair of side parts 46A to 46C (a side part 46 when not distinguished) parallel (or substantially parallel) to each other, and respectively by intermediate parts 48A to 48C (an intermediate part 48 when not distinguished) linking the pair of side parts 46A to 46C (see FIG. 5). Each of the U-shaped members 28 and 30 is molded from a wire rod 32 (see FIG. 8) made of electromagnetic steel pieces. Note that the U-shaped member 28 corresponds to a "first member" in the present invention, and the U-shaped members 30A to 30C correspond to a "second member" in the present invention.

The U-shaped member 30 is disposed in an attitude perpendicular to the U-shaped member 28. In other words, a longitudinal direction of the intermediate part 44 of the U-shaped member 28 is perpendicular to a longitudinal direction of each of the intermediate parts 48A to 48C of the U-shaped members 30A to 30C.

The pair of side parts 42 of each U-shaped member 28 is inserted into the frame hole 25 formed in each armature coil 24 so as to be astride the armature coils 24 adjacent in the rotation direction. Each of the pairs of side parts 46A to 46C of the respective U-shaped members 30 is inserted into the frame hole 25 formed in each armature coil 24 so as to be astride the armature coils 24 disposed in series (two rows) in the axial direction.

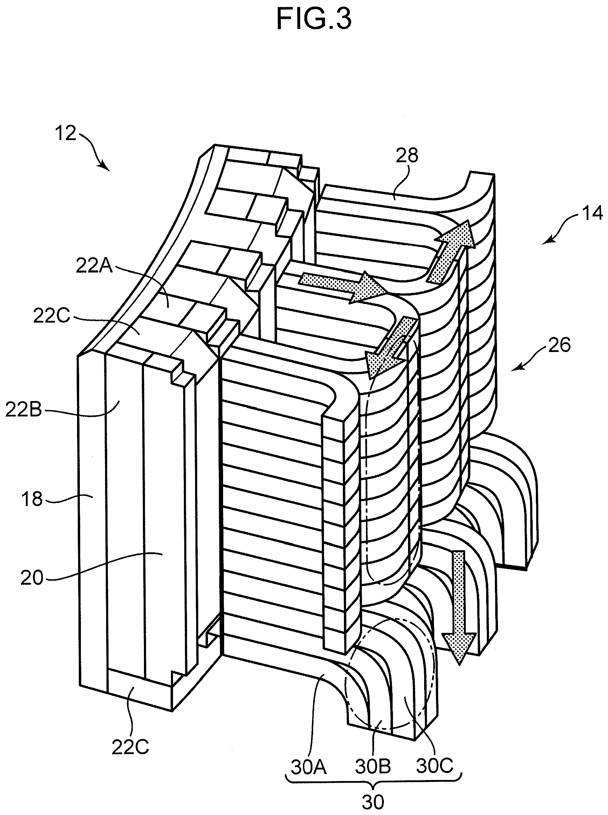

FIG. 3 is an enlarged view of an upper part of FIG. 2 from which the armature coil 24 is removed. In addition, FIG. 4 is a view of FIG. 3 as viewed from a direction along the rotation axis, and FIG. 5 is a view of FIG. 3 as viewed in the rotation direction. Arrows illustrated in FIGS. 3 to 5 indicate a flow of a magnetic flux when the armature coil 24 (not illustrated in FIGS. 3 to 5) is energized.

As illustrated in FIGS. 3 to 5, the plurality of U-shaped members 28 have the intermediate parts 44 disposed along the rotation direction of the armature 14. In addition, the U-shaped members 28 are disposed at equal angular intervals in the rotation direction, and the plurality of U-shaped members 28 are disposed so as to be stacked in the axial direction.

The plurality of U-shaped members 30A to 30C have the intermediate parts 48A to 48C, respectively, disposed along the rotation axis CL. In addition, in the plurality of U-shaped members 30A to 30C, the pair of side parts 46A to 46C overlap the pair of side parts 46A to 46C respectively of the adjacent U-shaped members 30A to 30C in the axial direction, and the intermediate parts 48A to 48C overlap the intermediate parts 48A to 48C of the adjacent U-shaped members 30A to 30C in the radial direction about the rotation axis CL.

Specifically, the U-shaped member 30A has the pair of side parts 46A disposed on an innermost side in the axial direction, and the intermediate part 48A disposed on an innermost side in the radial direction. The U-shaped member 30B is disposed such that the pair of side parts 46B overlaps the pair of side parts 46A of the U-shaped member 30A on an outer side in the axial direction, and the intermediate part 48B overlaps the intermediate part 48A of the U-shaped member 30A on an outer side in the radial direction. The U-shaped member 30C is disposed such that the pair of side parts 46C overlaps the pair of side parts 46B of the U-shaped member 30B on the outer side in the axial direction, and the intermediate part 48C overlaps the intermediate part 48B of the U-shaped member 30B on the outer side in the radial direction. In other words, in the U-shaped member 30C, among the plurality of U-shaped members 30A to 30C, the pair of side parts 46C is disposed on an outermost side in the axial direction, and the intermediate part 48C is disposed on an outermost side in the radial direction.

In an assembled state, each of the side parts 42, and 46A to 46C respectively of the U-shaped members 28 and 30 has a distal end opposed to the mover 12 and surrounded by the armature coil 24. These side parts 42 and 46 constitute teeth parts surrounded by the armature coils 24 in the iron core 26 (stator core). In addition, the intermediate parts 44, and 48A to 48C respectively of the U-shaped members 28 and 30 constitute yoke parts that link the pair of side parts 42, and 46A to 46C in the iron core 26 (stator core).

When the armature coil 24 of the armature 14 configured as described above is energized, a magnetic path through which the magnetic flux three-dimensionally flows is formed. In other words, as indicated by the arrows in FIGS. 3 to 5, the magnetic flux flows into and out of the teeth parts (side parts 42, and 46A to 46C) of the U-shaped members 28 and 30 in the radial direction. In addition, the magnetic flux moved in the radial direction flows so as to branch into the axial direction along the intermediate part 48 (yoke part) of the U-shaped member 30 in addition to one side and the other side of the rotation direction along the intermediate part 44 (yoke part) of the U-shaped member 28. As a result, a magnetic path through which the magnetic flux flows three-dimensionally is formed.

Here, the shorter the path of the magnetic flux, the smaller a total amount of the wire rod 32. In addition, since a loss caused when the magnetic flux changes with time depends on a volume of the iron core 26 through which the magnetic flux passes, the loss can be reduced as the path is shorter. From these, it is desirable that the magnetic flux paths are connected by a shortest route. Therefore, the U-shaped members 30 stacked in a direction in which the magnetic flux flows in the axial direction are disposed at the center in the axial direction of the iron core 26 of the armature 14, and the U-shaped members 28 stacked in a direction in which the magnetic flux flows in the rotation direction are disposed on opposite sides of the U-shaped members 30 in the axial direction of the armature 14. In addition, the U-shaped members 30 have a nested structure in which the three U-shaped members 30A to 30C having different sizes are disposed so as to overlap without a clearance, thereby shortening the path of the magnetic flux.

Furthermore, the U-shaped members 28 and 30 are formed to have a quadrangular (angular) cross section. Since the U-shaped members 28 and 30 are formed to have the quadrangular cross section, the teeth parts and the yoke parts can be densely formed in a state where the U-shaped members 28 and 30 are stacked. In other words, it is possible to maximize cross-sectional areas of the teeth parts and the yoke parts through which the magnetic flux passes in the U-shaped members 28 and 30.

In addition, surfaces of the U-shaped members 28 and 30 are each coated with an insulating film. Since the surfaces of the U-shaped members 28 and 30 are coated with an insulating film, conduction between the U-shaped members 28 and 30 adjacent to each other is prevented. Note that when the U-shaped members 28 and 30 adjacent to each other are electrically connected to each other, an eddy current is generated to increase the loss. Even in a case where the U-shaped members 28 and 30 adjacent to each other are electrically connected to each other, generation of the eddy current can be reduced by contact resistance as compared with a case where the entire iron core is formed of one iron ingot. Furthermore, in order to sufficiently reduce the loss due to the generation of the eddy current, it is preferable to insulate and coat the surfaces of the U-shaped members 28 and 30, respectively. By sufficiently reducing the loss due to the generation of the eddy current, the electric motor 10 can be suitably used for high-speed drive applications.

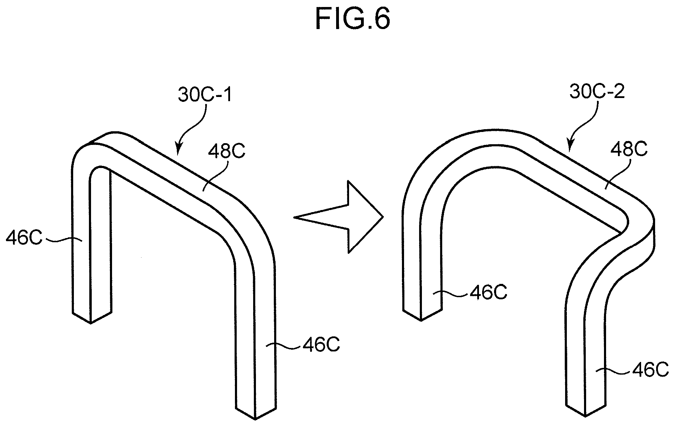

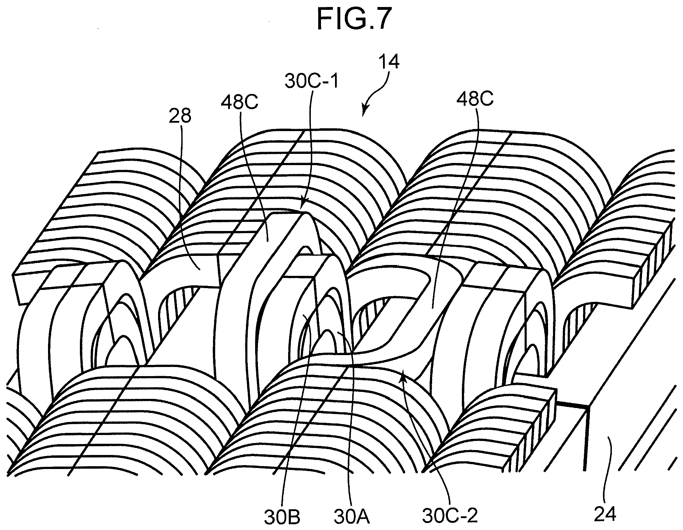

In addition, as illustrated in FIG. 5 and the like, since the intermediate parts 48A to 48C (yoke parts) of the U-shaped members 30A to 30C are disposed so as to be stacked in the radial direction, there is a possibility that the intermediate parts 48A to 48C protrude in the radial direction, and the armature 14 becomes large in the radial direction. On the other hand, as illustrated in FIGS. 6 and 7, of the U-shaped member 30, the intermediate part 48C of the U-shaped member 30C having the pair of side parts 46C (teeth part) located at opposite ends in the axial direction is bent in the rotation direction with respect to the pair of side parts 46C, so that it is also possible to avoid protrusion of the intermediate part 48C in the radial direction.

A U-shaped member 30C-1 on the left side in FIG. 6 shows a shape before bending, and a U-shaped member 30C-2 on the right side shows a shape after bending. As illustrated in FIG. 6, in the U-shaped member 30C-2 on the right side, the intermediate part 48C is bent at a substantially right angle (90 degrees) with respect to the pair of side parts 46C forming the teeth part.

FIG. 7 illustrates a state in which the U-shaped member 30C-2 having the intermediate part 48C bent with respect to the pair of side parts 46C (teeth part) is assembled to the armature 14. Note that FIG. 7 also illustrates the U-shaped member 30C-1 in which the intermediate part 48C is not bent with respect to the pair of side parts 46C. In the U-shaped member 30C-2 illustrated in FIG. 7, the intermediate part 48C is bent in the rotation direction with respect to the pair of side parts 46C (teeth part), so that the intermediate part 48C (yoke part) is located at a radially inner side as compared with the intermediate part 48C of the U-shaped member 30C-1. This results in preventing the intermediate part 48C from protruding in the radial direction, thereby avoiding an increase in size of the armature 14 in the radial direction.

Note that in the U-shaped member 30C-2 of FIG. 7, although the intermediate part 48C is bent at a substantially right angle (90 degrees) with respect to the side part 46C (teeth part), a bending angle is freely adjusted within a range of 0 degrees to 90 degrees as long as interference with the adjacent U-shaped members 28 and 30 can be avoided after assembly. In addition, not only the U-shaped member 30C but also the U-shaped members 30A and 30B may be appropriately bent to further avoid an increase in size of the armature 14 in the radial direction.

### [Method for Manufacturing U-shaped Member]

Generally, although a size of the electric motor is changed according to an application, it is not easy to manufacture a dedicated component for each electric motor having a different size from the viewpoint of mass productivity. In addition, since the size of the electric motor that can be manufactured also depends on a size of a manufacturing device, in a case of a large electric motor exceeding the capacity of the manufacturing device in size, it is desirable to assemble the electric motor after an iron core is divided and manufactured. In other words, in manufacturing the iron core 26 of the present embodiment, by manufacturing the plurality of U-shaped members 28 and 30 and assembling the U-shaped members 28 and 30, the iron core 26 of an arbitrary size can be manufactured.

In the following, a method for manufacturing the U-shaped members 28 and 30 will be described. FIG. 8 is a view illustrating the method for manufacturing the U-shaped members 28 and 30. Each of the U-shaped members 28 and 30 is formed of the common wire rod 32. The wire rod 32 is bent at a bending position A in the left side in FIG. 8, and an extra area indicated by a broken line is cut to form an L-shaped member 35A illustrated in the upper right in FIG. 8. In addition, the wire rod 32 is bent at a bending position B in the left side in FIG. 8, and an extra area indicated by a broken line is cut to form an L-shaped member 35B illustrated in the lower right in FIG. 8. Next, end parts of the pair of L-shaped members 35A are joined in a state of being in contact with each other, whereby a U-shaped member having a predetermined dimension is molded. Similarly, by joining end parts of the pair of L-shaped members 35B in a state of being in contact with each other, a U-shaped member having a dimension different from that in the upper right of FIG. 8 is molded. As described above, since the U-shaped member is configured by the pair of L-shaped members, it is possible to manufacture even a U-shaped member having a large dimension.

As described above, by adjusting the bending position of the wire rod 32, a U-shaped member having an arbitrary dimension can be formed from the common wire rod 32. For example, the U-shaped member 28, the U-shaped member 30A, the U-shaped member 30B, and the U-shaped member 30C of the present embodiment have different dimensions. On the other hand, by adjusting the bending position of the wire rod 32 and molding L-shaped members having different dimensions, the U-shaped members 28 and 30 can be formed from the common wire rod 32.

In addition, when a clearance is formed between joint parts of the pair of L-shaped members, there is a concern that magnetic resistance increases. Therefore, it is desirable to have a structure in which the pair of L-shaped members are brought into contact with each other without a clearance at the joint part and strength is secured even after joining to prevent deviation, for example, in a shearing direction. By contrast, stepped shapes or uneven shapes may be formed at the end parts of the L-shaped members adjacent in a stacking direction, and stepped shapes or uneven shapes may also be formed at the end parts of the L-shaped members joined thereto. When a U-shaped member is molded by joining the L-shaped members to each other, the stepped shapes or the uneven shapes formed in the L-shaped members may be fitted to each other to secure the strength of the joint parts.

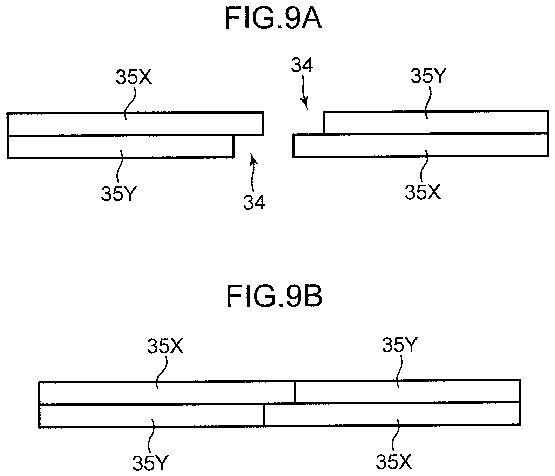

FIG. 9A illustrates a mode in which a stepped shape 34 is formed by two L-shaped members 35X and 35Y adjacent in the stacking direction, and FIG. 9B illustrates a state in which the L-shaped members 35X and 35Y in FIG. 9A are joined.

As illustrated on the left side of FIG. 9A, the two L-shaped members 35X and 35Y having different lengths overlap to form the stepped shape 34. Similarly, also on the right side of FIG. 9A, the two L-shaped members 35X and 35Y having different lengths overlap to form the stepped shape 34. Note that the L-shaped member 35X and the L-shaped member 35Y having different dimensions are disposed so as to be joined. In the state illustrated in FIG. 9A, joining the L-shaped members 35X and 35Y opposed to each other in a left-right direction to each other brings the state illustrated in FIG. 9B. At this time, the stepped shapes 34 formed on the left and right sides are fitted to each other to bring the joint parts to be adjacent to the L-shaped members 35X and 35Y, so that each joint part is less likely to deviate in the shearing direction.

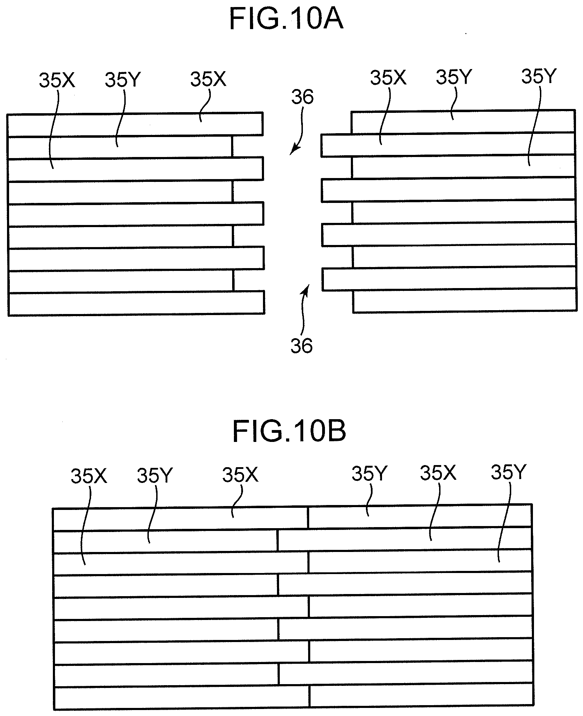

FIG. 10A illustrates a mode in which an uneven shape 36 is formed by three or more L-shaped members 35X and 35Y adjacent in the stacking direction, and FIG. 10B illustrates a state in which the L-shaped members 35X and 35Y in FIG. 10A are joined.

As illustrated on the left side of FIG. 10A, three or more L-shaped members 35X and 35Y having different lengths are alternately overlapped in the stacking direction to form the uneven shape 36. Similarly, also on the right side of FIG. 10A, three or more L-shaped members 35X and 35Y having different lengths are alternately overlapped in the stacking direction to form the uneven shape 36. The uneven shapes 36 opposed to each other in FIG. 10A are formed such that a concave part and a convex part are opposite to each other. In other words, the L-shaped member 35X and the L-shaped member 35Y are disposed so as to be joined. In the state illustrated in FIG. 10A, joining, to each other, the L-shaped members 35X and 35Y opposed to each other brings the state illustrated in FIG. 10B. At this time, the uneven shapes 36 formed on the left and right sides are fitted to each other to bring the joint parts to be adjacent to the L-shaped members 35X and 35Y, so that the joint parts are less likely to deviate in the shearing direction.

### [Method for Fixing Iron Core]

Next, a method for fixing the U-shaped members 28 and 30 will be described. While the iron core 26 of the armature 14 is configured by combining the plurality of U-shaped members 28 and 30, a structure for holding these members is required. In the electric motor 10 of the present embodiment, since the magnetic flux flows in two directions of the rotation direction and the axial direction, a cross-sectional area in each direction becomes small, and as a result, the intermediate parts 44 and 48 (yoke parts) of the U-shaped members 28 and 30 become thin. Therefore, it is desirable to have a structure that suppresses deformation of the iron core 26 of the armature 14 due to an electromagnetic force generated when the electric motor 10 is driven. In order to cope with these, the entire iron core 26 of the armature 14 is fixed by holding the entire intermediate part (the entire yoke part) of each of the U-shaped members 28 and 30 from a radially outer side by a holding member 40 to be described later.

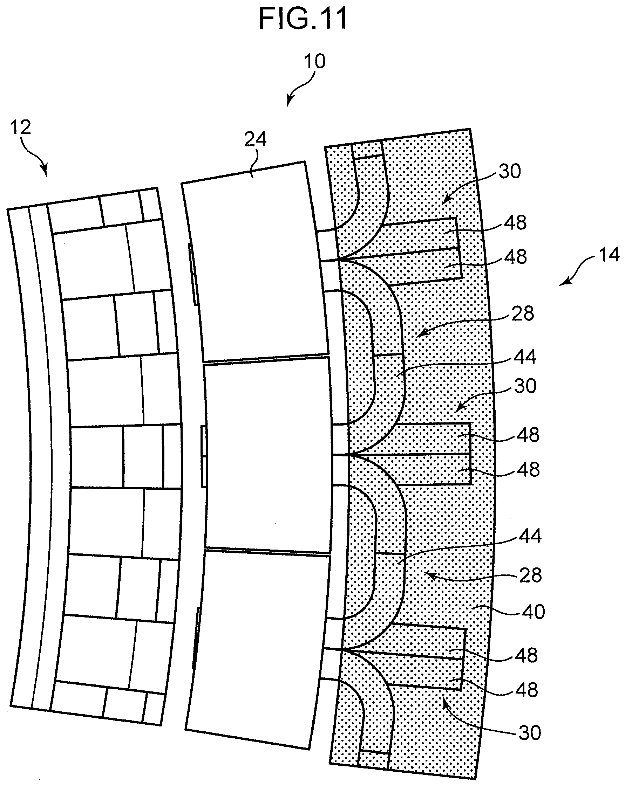

FIG. 11 is a view illustrating a mode in which the holding member 40 is used as one mode of a fixing structure for fixing the U-shaped members 28 and 30, and is a view in which a part of the rotation direction of the electric motor 10 is viewed in the rotation axis direction. As illustrated in FIG. 11, the intermediate parts 44 and 48 (yoke parts) of the U-shaped members 28 and 30 are covered with the holding member 40 formed in an annular shape, and the entire yoke parts are held by the holding member 40. As a result, the U-shaped members 28 and 30 are held by the holding member 40, and deformation of the iron core 26 is also suppressed by the holding member 40.

The holding member 40 is preferably made of resin. The resin is characterized in having insulation properties and being lightweight. Since the holding member 40 is at a position close to the armature coil 24 through which a current flows when the electric motor 10 is driven, the holding member may come into contact with the armature coil 24. As a countermeasure, the holding member 40 is formed of an insulating resin, so that even when the holding member 40 comes into contact with the armature coil 24, the holding member 40 is not adversely affected. In addition, by forming the holding member 40 of lightweight resin, an increase in weight of the electric motor 10 can be suppressed.

Incidentally, an insulating paper 45 is interposed between the armature coil 24 and the side parts 42 and 46 (teeth parts) of the U-shaped members 28 and 30 to prevent energization between the armature coil 24 and the U-shaped members 28 and 30. FIG. 12A illustrates a state immediately before the side parts 42 and 46 of the pair of U-shaped members 28 and 30 adjacent to each other are inserted into the frame hole 25 of the armature coil 24, and FIG. 12B illustrates a state after the side parts 42 and 46 of the pair of U-shaped members 28 and 30 are inserted into the frame hole 25 of the armature coil 24. As illustrated in FIG. 12A, the insulating paper 45 is inserted in advance into the frame hole 25 of the armature coil 24, and from this state, the side parts 42 and 46 of the U-shaped members 28 and 30 are inserted into the frame hole 25.

Here, in a case where each of the U-shaped members 28 and 30 is fixed by the holding member 40, as illustrated in FIG. 12, the holding member 40 is located at the intermediate parts 44 and 48 (yoke parts) of the U-shaped members 28 and 30 on a side approaching the armature coil 24. When the holding member 40 interferes with the insulating paper 45, there is a possibility that the insulating paper 45 cannot appropriately insulate between the armature coil 24 and the side parts 42 and 46 of the U-shaped members 28 and 30. When the insulation is insufficient, in a case where a current leak occurs in the armature coil 24, a current related to magnetic interaction is reduced because the current does not pass through an assumed path, resulting in inviting decrease of the electromagnetic force, and additionally causing adverse effects on other apparatus.

In order to prevent this, a space 49 (notch) into which the insulating paper 45 is inserted is formed at a part of the holding member 40 that covers the U-shaped members 28 and 30, the part being opposed to the side parts 42 and 46 of the U-shaped members 28 and 30. The space 49 is formed at a connection part between the side parts (teeth parts) and the intermediate parts (yoke parts) of the U-shaped members 28 and 30. By forming the space 49, when the side parts 42 and 46 are inserted into the frame holes 25 of the armature coils 24, an end part of the insulating paper 45 is inserted into the space 49 as illustrated in FIG. 12B. As a result, the U-shaped members 28 and 30 and the armature coils 24 are appropriately insulated from each other by the insulating paper 45.

### [Method for Manufacturing Armature]

Next, a method for manufacturing the armature 14 will be described. The above-described holding member 40 is configured by a plurality of blocks, and these blocks are assembled. Each block has a function of fixing a prescribed number of U-shaped members 28 and 30 in a bundled state. For example, the plurality of U-shaped members 28 surrounded by a chain line in FIG. 3 are blocked and fixed in one block. In addition, the U-shaped members 30A to 30C surrounded by a chain double-dashed line in FIG. 3 are blocked and fixed in one block.

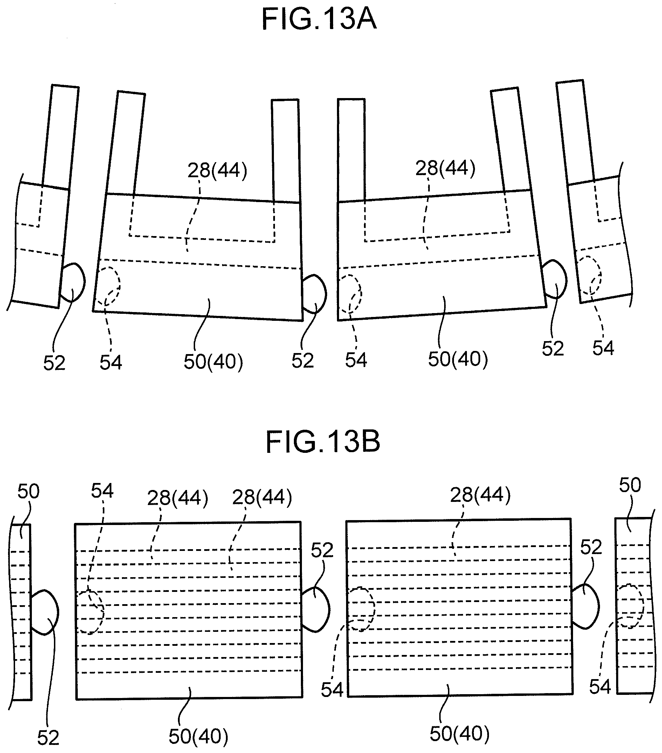

FIG. 13 illustrates a mode of the block 50 forming the holding member 40, and illustrates the fixing structure of the plurality of U-shaped members 28. FIG. 13A shows a top view of the block 50, and FIG. 13B shows a side view of the block 50. In FIG. 13, a part of the U-shaped member 28 accommodated in the block 50 is indicated by a broken line. As illustrated in FIG. 13, in a state where the plurality of U-shaped members 28 are bundled, the intermediate part 44 of the U-shaped member 28 is fixed so as to be covered by the block 50. Similarly, the plurality of U-shaped members 28 adjacent to each other in the rotation direction after assembly are also fixed by the block 50.

Each block 50 is formed with an engagement protrusion 52 and an engagement hole 54 that engage with the adjacent block 50 after assembly. The engagement protrusion 52 is located on one side in the rotation direction, while the engagement hole 54 is formed so as to be located on the other side in the rotation direction. At the time of assembly, the adjacent blocks 50 are connected by engagement of the engagement protrusions 52 and the engagement holes 54 of the adjacent blocks 50 with each other. Shapes of the engagement protrusion 52 and the engagement hole 54 are not limited to the shapes illustrated in FIG. 13, and may be appropriately changed as long as they can be engaged with each other.

Similarly, the U-shaped members 30A to 30C are fixed by a block in a bundled state. An engagement protrusion or an engagement hole connected to the block 50 adjacent in the axial direction is formed in this block. At the time of assembly, by engaging the above-described engagement protrusion or engagement hole with an engagement hole or an engagement protrusion (not illustrated) formed in the axial direction of the block 50 adjacent in the axial direction, the block for fixing the U-shaped members 30A to 30C is connected to the block 50. As a result, the blocks adjacent in the rotation direction and the axial direction are connected to each other, whereby the holding member 40 that holds the plurality of U-shaped members 28 and 30 from a radially outer side is molded after assembly of the blocks. In other words, the iron core 26 in which the plurality of U-shaped members 28 and 30 are held by the holding member 40 is formed.

Instead of the above-described holding member 40 configured by the plurality of blocks, a holding member 60 molded using a 3D printer can be used to fix the U-shaped members 28 and 30.

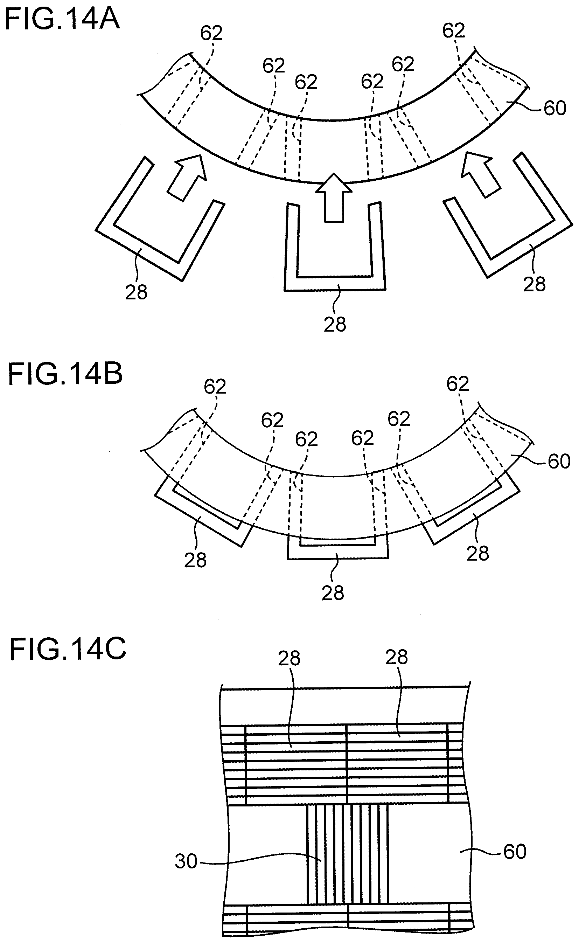

FIG. 14 is a view for explaining the fixing structure of the U-shaped members 28 and 30 using the holding member 60. FIG. 14A illustrates an assembly step of inserting the U-shaped member 28 into the holding member 60, FIG. 14B illustrates a state in which the U-shaped member 28 is inserted into the holding member 60, and FIG. 14C illustrates a state in which the U-shaped member 30 is assembled in addition to the U-shaped member 28.

The holding member 60 has an annular shape made of resin, for example. The holding member 60 is formed with a plurality of insertion holes 62 into which the side parts 42 and 46 respectively of the plurality of U-shaped members 28 and 30 are inserted. At the time of assembly, the side parts 42 and 46 respectively of the U-shaped members 28 and 30 are inserted into the predetermined insertion holes 62, and then the U-shaped members 28 and 30 are bonded to the holding member 60 by using an adhesive or the like. As a result, the state illustrated in FIGS. 14B and 14C is obtained, and the U-shaped members 28 and 30 are fixed to the holding member 60. Note that the holding member 60 may be configured not only by one member but also by combining a plurality of blocks.

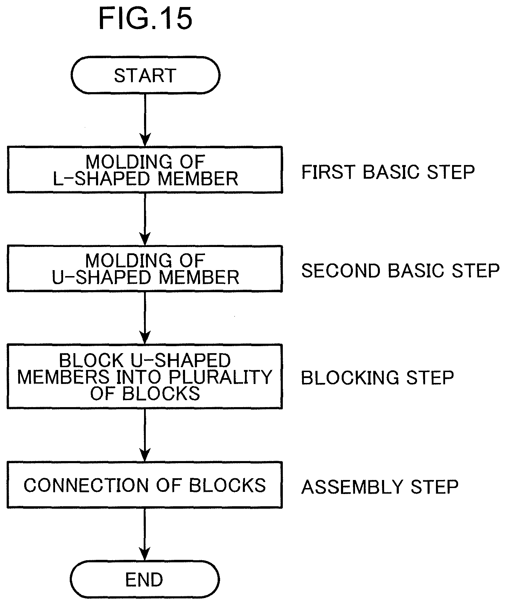

FIG. 15 is a flowchart for explaining a flow of a step of manufacturing the armature 14 including the U-shaped members 28 and 30. The flowchart of FIG. 15 corresponds to a mode using the holding member 40 described above.

In a first basic step of FIG. 15, the wire rod 32 is bent at a predetermined position and an extra part is cut to mold a plurality of L-shaped members having desired dimensions. In a second basic step, the L-shaped members molded in the first basic step are joined to mold the plurality of U-shaped members 28 and 30 having desired dimensions. In a blocking step, the plurality of blocks 50 in which a prescribed number among the plurality of U-shaped members 28 are fixed in a bundled state are molded, and the plurality of blocks fixed in a state of being bundled by the prescribed number among the plurality of U-shaped members 30A to 30C are molded. In an assembly step, the plurality of molded blocks are connected to each other and molded into one holding member 40. At this time, the blocks adjacent to each other are integrally connected by engaging engagement parts (engagement protrusion 52, engagement hole 54) formed in the adjacent blocks with each other. Note that the second basic step corresponds to a "first step" in the present invention, the blocking step corresponds to a "second step" in the present invention, and the assembly step corresponds to a "third step" in the present invention.

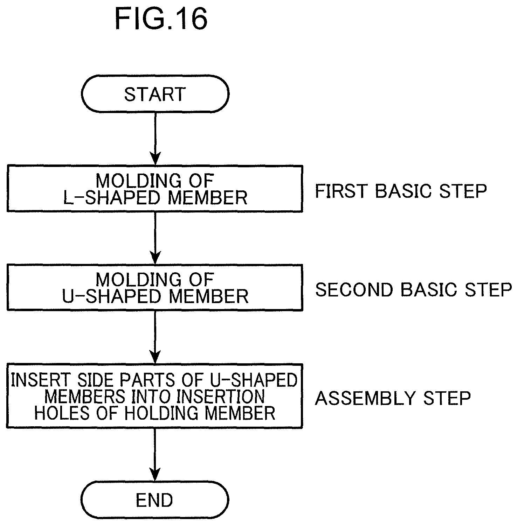

FIG. 16 is a flowchart for explaining a flow of a step of manufacturing the armature 14 in a case where the holding member 60 is used instead of the holding member 40. In the first basic step of FIG. 16, the wire rod 32 is bent at a predetermined position and an extra part is cut to mold a plurality of L-shaped members having desired dimensions. In a second basic step, the L-shaped members molded in the first basic step are joined to mold the plurality of U-shaped members 28 and 30 having desired dimensions. In the assembly step, the side parts 42 and 46 respectively of the U-shaped members 28 and 30 molded in the second basic step are inserted from radially outside into the insertion holes 62 formed in the holding member 60 formed by the 3D printer, and then the U-shaped members 28 and 30 are fixed to the holding member 60 by using an adhesive or the like. The second basic step corresponds to the "first step" in the present invention, and the assembly step corresponds to the "second step" in the present invention.

### [Operation etc.]

As described in the foregoing, a magnetic path through which a magnetic flux three-dimensionally flows can be easily formed by configuring the iron core 26 with the plurality of U-shaped members 28 and 30, disposing the intermediate parts 44 of the U-shaped members 28 along the rotation direction, and disposing the intermediate parts 48 of the U-shaped members 30 along the rotation axis CL. In addition, by fixing the U-shaped members 28 and 30 with the holding member 40, the armature 14 (iron core 26) including the plurality of U-shaped members 28 and 30 can be easily manufactured. Alternatively, also by using the holding member 60 having the insertion holes 62 into which the side parts 42 and 46 of the U-shaped members 28 and 30 are inserted, the armature 14 (iron core 26) including the plurality of U-shaped members 28 and 30 can be easily manufactured.

### [Modifications]

Although the embodiment of the present invention has been described above, the present invention is not limited to the above-described embodiment, and may be appropriately changed without departing from the gist of the invention. For example, although in the above embodiment, the U-shaped members 28 and 30 are formed by connecting the pair of L-shaped members 35 to each other, in a case, for example, where the electric motor 10 is small, the U-shaped members may be formed by bending two positions of one wire rod 32.

Although in the above embodiment, among the U-shaped members 30A to 30C having the intermediate parts overlapped in the radial direction, only the U-shaped member 30C located on a radially outermost side in the radial direction is bent, the U-shaped members 30A and 30B may also be bent.

Although in the above embodiment, the two armature coils 24 are disposed in series in the axial direction, the number is not necessarily limited to two. In other words, three or more armature coils 24 may be disposed in series in the axial direction.

Although in the above embodiment, the surfaces of the U-shaped members 28 and 30 are coated with the insulating film, the insulating film may not be applied. A loss can be reduced also by, for example, rounding cross-sectional areas of the U-shaped members 28 and 30 to minimize contact areas of the adjacent U-shaped members 28 and 30.

While in the above embodiment, the engagement protrusions 52 and the engagement holes 54 are formed in the blocks that fix the plurality of U-shaped members 28 and 30, and the adjacent blocks are connected by engaging the engagement protrusions 52 and the engagement holes 54 of the adjacent blocks with each other, a method for connecting the blocks is not limited thereto. For example, a screw hole may be formed in each block to connect the adjacent blocks by screwing. Alternatively, an engagement part with which a clip is engaged may be set in each block, and the respective blocks may be connected by the clip installed so as to be astride the adjacent blocks. Alternatively, the adjacent blocks may be connected by an adhesive, welding, or the like.

Although in the above embodiment, the plurality of U-shaped members 28 and 30 are inserted into the insertion holes 62 of the holding member 60 and then bonded and fixed with an adhesive or the like, the present invention is not necessarily limited to the adhesive. For example, the U-shaped members 28 and 30 may be fixed by being press-fitted into the insertion holes 62.

An electric motor according to a first aspect of the present invention is an electric motor including: an armature including an iron core and an armature coil provided so as to surround the iron core; and a mover disposed to be opposed to the armature, in which the iron core of the armature is configured by a plurality of members made of electromagnetic steel pieces, each of the plurality of members has a U-shape including a pair of side parts parallel or substantially parallel to each other and an intermediate part linking the pair of side parts, the plurality of members include a plurality of first members and a plurality of second members having a longitudinal direction of the intermediate part perpendicular to a longitudinal direction of the intermediate part of the first member, each of the intermediate parts of the first members and the intermediate parts of the second members constitutes a yoke part of the iron core, and each of the side parts of the first members and the side parts of the second members constitutes a teeth part of the iron core.

According to the first aspect, by disposing the intermediate part of the first member and the intermediate part of the second member, which are formed in the U shape and constitute the iron core of the armature, so as to face directions orthogonal to each other, it is possible to easily realize a magnetic path through which a magnetic flux three-dimensionally flows.

An electric motor according to a second aspect is the electric motor according to the first aspect, in which the mover is configured to be rotatable about a rotation axis, the plurality of first members have the intermediate parts disposed along a rotation direction of the mover, and the plurality of second members have the intermediate parts disposed along the rotation axis. According to the second aspect, it is possible to easily realize a magnetic path through which a magnetic flux flows in the rotation direction and the rotation axis direction.

An electric motor according to a third aspect is the electric motor according to the second aspect, in which the plurality of second members are disposed at a center in the armature in a direction of the rotation axis, and the plurality of first members are disposed, in the armature, on opposite sides of the second members in the direction of the rotation axis. According to the third aspect, it is possible to form a magnetic path having the shortest path for a magnetic flux.

An electric motor according to a fourth aspect is the electric motor according to any one of the first to third aspects, in which each of the plurality of members made of the electromagnetic steel pieces has a surface insulated and coated. According to the third aspect, a loss caused by generation of an eddy current can be effectively reduced.

An electric motor according to a fifth aspect is the electric motor according to any one of the first to fourth aspects, in which the electromagnetic steel piece is configured by a wire rod. According to the fifth aspect, a U-shaped member can be easily molded by bending the wire rod.

An electric motor according to a sixth aspect is the electric motor according to any one of the first to fifth aspects, in which each of the plurality of second members is disposed to have the pair of side parts overlapping, in a direction of the rotation axis, the pair of side parts of the second member adjacent, and to have the intermediate part overlapping, in a radial direction about the rotation axis, the intermediate part of the second member adjacent, and the second member having the pair of side parts located at opposite ends in the direction of the rotation axis has at least the intermediate part bent in the rotation direction with respect to the pair of side parts. According to the sixth aspect, since the intermediate parts of the second members are disposed so as to overlap in the radial direction, the iron core is easily increased in size in the radial direction. On the other hand, in the second member part in which at least the paired side parts are located at opposite ends in the direction of the rotation axis, the intermediate part is bent in the rotation direction with respect to the pair of side parts, whereby an increase in size of the iron core in the radial direction can be reduced.

An electric motor according to a seventh aspect is the electric motor according to any one of the first to sixth aspects, in which further includes a holding member made of resin and holding the entire yoke part formed by the intermediate parts of the plurality of members from radially outside. According to the seventh aspect, deformation of the iron core during driving of the electric motor can be suppressed by the holding member. In addition, since the holding member is made of resin, an increase in weight due to the provision of the holding member can also be reduced.

An electric motor according to an eighth aspect is the electric motor according to the seventh aspect, in which the holding member has an insertion hole into which each of the side parts of the plurality of members is inserted from radially outside. According to the eighth aspect, the iron core can be easily configured by inserting each of the side parts of the plurality of members into the insertion hole formed in the holding member at the time of assembly.

A method according to a ninth aspect of the present invention is a method for manufacturing the armature manufacturing the electric motor according to the seventh aspect, the method including: a first step of molding each of the plurality of first members and the plurality of second members; a second step of molding a plurality of blocks in which the plurality of first members and the plurality of second members are fixed on a prescribed number basis; and a third step of connecting the plurality of blocks to each other to mold the holding member. According to the ninth aspect, it is possible to easily manufacture the armature including the plurality of first members and the plurality of second members by molding the plurality of blocks in which the prescribed number of the first members and the second members are fixed and connecting the plurality of blocks to each other to mold the holding member.

A method according to a tenth aspect of the present invention is a method for manufacturing the armature manufacturing the electric motor according to the eighth aspect, the method including: a first step of molding each of the plurality of first members and the plurality of second members; and a second step of inserting each of the side parts of the plurality of first members and each of the side parts of the plurality of second members into the insertion hole of the holding member. According to the tenth aspect, by inserting each side part of the plurality of first members and each side part of the plurality of second members into the insertion hole formed in the holding member, the armature including the plurality of first members and the plurality of second members can be easily manufactured.

## Claims

1. An electric motor comprising:
an armature including an iron core and an armature coil provided so as to surround the iron core; and
a mover disposed to be opposed to the armature,
wherein the iron core of the armature is configured by a plurality of members made of electromagnetic steel pieces,
each of the plurality of members has a U-shape including a pair of side parts parallel or substantially parallel to each other and an intermediate part linking the pair of side parts,
the plurality of members include a plurality of first members and a plurality of second members having a longitudinal direction of the intermediate part perpendicular to a longitudinal direction of the intermediate part of the first member,
each of the intermediate parts of the first members and the intermediate parts of the second members constitutes a yoke part of the iron core, and
each of the side parts of the first members and the side parts of the second members constitutes a teeth part of the iron core.

2. The electric motor according to claim 1, wherein
the mover is configured to be rotatable about a rotation axis,
the plurality of first members have the intermediate parts disposed along a rotation direction of the mover, and
the plurality of second members have the intermediate parts disposed along the rotation axis.

3. The electric motor according to claim 2, wherein
the plurality of second members are disposed at a center in the armature in a direction of the rotation axis, and
the plurality of first members are disposed, in the armature, on opposite sides of the second members in the direction of the rotation axis.

4. The electric motor according to any one of claims 1 to 3, wherein each of the plurality of members made of the electromagnetic steel pieces has a surface insulated and coated.

5. The electric motor according to any one of claims 1 to 3, wherein the electromagnetic steel piece is configured by a wire rod.

6. The electric motor according to claim 2 or 3, wherein
each of the plurality of second members is disposed to have the pair of side parts overlapping, in a direction of the rotation axis, the pair of side parts of the second member adjacent, and to have the intermediate part overlapping, in a radial direction about the rotation axis, the intermediate part of the second member adjacent, and
the second member having the pair of side parts located at opposite ends in the direction of the rotation axis has at least the intermediate part bent in the rotation direction with respect to the pair of side parts.

7. The electric motor according to any one of claims 1 to 3, further comprising a holding member made of resin and holding the entire yoke part formed by the intermediate parts of the plurality of members from radially outside.

8. The electric motor according to claim 7, wherein the holding member has an insertion hole into which each of the side parts of the plurality of members is inserted from radially outside.

9. A method for manufacturing the armature constituting the electric motor according to claim 7, the method comprising:
a first step of molding each of the plurality of first members and the plurality of second members;
a second step of molding a plurality of blocks in which the plurality of first members and the plurality of second members are fixed on a prescribed number basis; and
a third step of connecting the plurality of blocks to each other to mold the holding member.

10. A method for manufacturing the armature constituting the electric motor according to claim 8, the method comprising:
a first step of molding each of the plurality of first members and the plurality of second members; and
a second step of inserting each of the side parts of the plurality of first members and each of the side parts of the plurality of second members into the insertion hole of the holding member.
